(19) Europäisches Patentamt
European Patent Office
Office européen des brevets

(11) **EP 3 477 060 B1**

(12) **EUROPEAN PATENT SPECIFICATION**

(45) Date of publication and mention
of the grant of the patent:
**27.05.2020 Bulletin 2020/22**

(51) Int Cl.:
*F01D 5/22* (2006.01)     *F01D 9/04* (2006.01)
*F01D 25/24* (2006.01)

(21) Application number: **18197243.1**

(22) Date of filing: **27.09.2018**

(54) **A CASING ASSEMBLY AND METHOD OF MANUFACTURING A CASING ASSEMBLY FOR A GAS TURBINE ENGINE**

GEHÄUSEANORDNUNG UND VERFAHREN ZUR HERSTELLUNG EINER GEHÄUSEANORDNUNG FÜR EINEN GASTURBINENMOTOR

ENSEMBLE DE BOÎTIER ET PROCÉDÉ DE FABRICATION D'UN ENSEMBLE DE CARTER POUR MOTEUR À TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2017 GB 201717577**

(43) Date of publication of application:
**01.05.2019 Bulletin 2019/18**

(73) Proprietor: **Rolls-Royce plc**
**London N1 9FX (GB)**

(72) Inventors:
• **Hobbs, Matthew**
**Derby, Derbyshire DE24 8BJ (GB)**
• **Miah, Ashraf**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(56) References cited:
EP-A2- 2 568 120          WO-A1-01/71165
WO-A2-2014/062270     GB-A- 2 547 273
GB-A- 2 551 164

**Description**

This disclosure relates to a casing assembly and a method of manufacturing a casing assembly for a gas turbine engine.

Existing gas turbine engines typically comprise a compressor casing having a slot, which extends circumferentially around a central axis of the gas turbine engine. The slot receives a plurality of stator vanes. In order to allow for thermal expansion of the stator vanes and compressor casing during operation of the gas turbine engine, the stator vanes are spaced apart along the slot using a circumferential locking method, and an axial gap is provided between a platform of the stator vane and the interior surfaces of the slot. This does however allow the stator vanes to rotate within the slot. In order to limit such rotational movement, axial locking of the stator vanes at low angles is encouraged by combining multiple vanes together such that their circumferential width is increased and such that they lock against the interior edges of the slots at a smaller angle. However, combining multiple vanes together can introduce non-conformance, cause build issues, increase cost and increase manufacture time.

It is therefore desirable to provide an improved gas turbine engine and method of manufacturing a stator vane for a gas turbine engine that overcome these issues. According to a first aspect of the disclosure there is provided a casing assembly for a gas turbine engine as set forth in claim 1.

The platforms of each of the stator vanes may have a scarf angle which is non-zero.

Each of the scarf angles may be between 12 and 30 degrees.

Each of the scarf angles may be between 18 and 21 degrees.

A single aerofoil may extend from the platform of each of the plurality of stator vanes.

The platform of at least one of the plurality of stator vanes may be pivotally connected to the casing.

The platform of the at least one of the plurality of stator vanes may be pivotally connected to the casing at an upstream portion of the platform.

The casing may be a compressor casing and the stator vanes may be compressor stator vanes.

According to a second aspect of the disclosure there is provided a method of manufacturing a casing assembly for a gas turbine engine as set forth in claim 12.

For a better understanding of the invention and to show more clearly how it may be carried into effect, reference will now be made, by way of example, to the accompanying drawings, in which:

Figure 1 shows a cross-sectional view of a gas turbine engine;

Figure 2 shows a cutaway perspective view of a compressor casing;

Figure 3 shows a perspective view of a stator vane;

Figure 4 shows a side view of the stator vane;

Figure 5 shows a plan view of the stator vane;

Figure 6 shows a plan view of a row of the stator vanes arranged in unrotated positions within a slot;

Figure 7 shows a plan view of a stator vane arranged in a rotated position within a slot;

Figure 8 shows a first geometric representation of a stator vane in plan view, with the stator vane shown in an unrotated position;

Figure 9 shows a second geometric representation of the stator vane in plan view, with the stator vane shown in a rotated and unrotated position;

Figure 10 shows a third geometric representation of the stator vane in plan view, with the stator vane shown in an unrotated position;

Figure 11 shows a fourth geometric representation of the stator vane in plan view, with the stator vane shown in a rotated position; and

Figure 12 shows a fifth geometric representation of the stator vane in plan view, with the stator vane shown in an unrotated position.

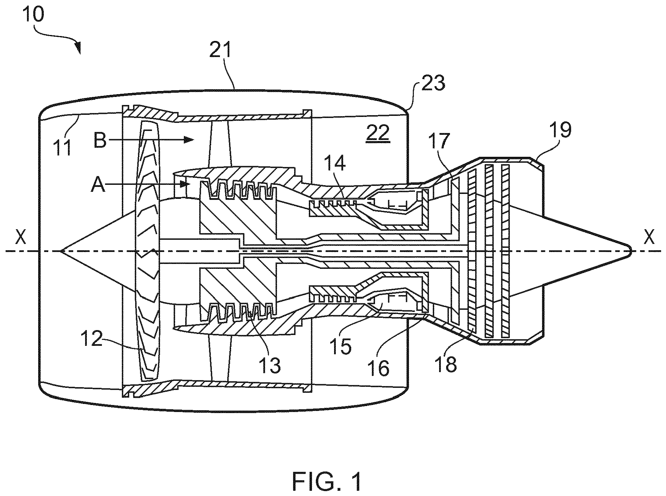

**Figure 1** shows a ducted fan gas turbine engine 10 (in particular a high bypass ratio turbofan) having a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. The intermediate pressure compressor 13 and the high-pressure compressor 14 are axial compressors of a core flow through the engine (core compressors). A nacelle 21 generally surrounds the engine 10 and defines the intake 11, a bypass duct 22 and a bypass exhaust nozzle 23.

During operation, air entering the intake 11 is accelerated by the fan 12 (which is also a compressor) to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14, where further compression takes place.

The compressed air exhausted from the high-pressure compressor 14 is directed into the combustion equipment 15 where it is mixed with fuel and the mixture is combusted. The resultant hot combustion products then expand through, and thereby drive, the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

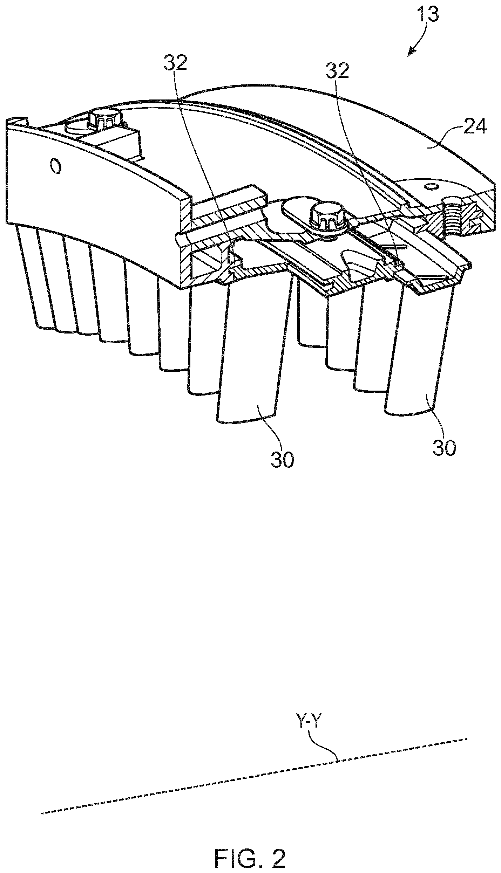

**Figure 2** shows a cutaway view of the intermediate pressure compressor 13 of Figure 1. The compressor 13 comprises a stationary annular compressor casing 24 and a plurality of stator vanes 30 (i.e. stator blades 30) which together form a casing assembly. The longitudinal axis Y-Y of the compressor 13 is aligned with the principal and rotational axis X-X of the gas turbine engine 10. The plurality of circumferentially arranged stator vanes 30 are fixed to the compressor casing 24 by way of a plurality of annular slots 32. The plurality of annular slots 32 extend circumferentially around the longitudinal axis Y-Y and have T-shaped cross-sectional profiles.

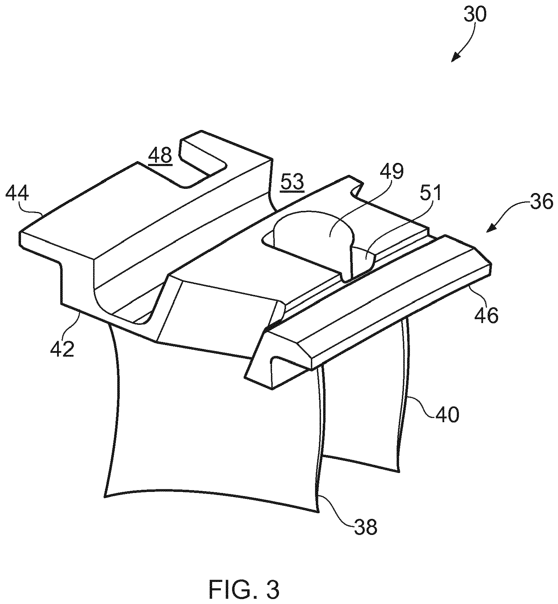

**Figure 3** shows a perspective view of a single stator vane 30. The stator vane 30 generally comprises a base 36, a first aerofoil 38 and a second aerofoil 40. Stator vanes 30 comprising a first aerofoil 38 and a second aerofoil 40 are commonly referred to as "welded doubles". The base 36 comprises a central platform 42 from which the first and second aerofoil 38, 40 extend. The stator vane 30 is a cantilevered stator vane, meaning that the first and second aerofoils 38, 40 are only supported from one end. The base 36 further comprises a front tang 44 and a rear tang 46 disposed on either side of the platform 42. A notch 48 is formed in the front tang 44 towards one end and extending inwards towards the central platform 42. A borescope hole 49 and a contiguous air offtake 51 extend through the platform 42, from a radially inner side of the platform 42 to a radially outer side of the platform 42. A slot 53 extends from one side of the platform 42 to the other.

When installed within one of the slots 32, the front tangs 44 are disposed upstream of the rear tangs 46, and the first and second aerofoils 38, 40 extend towards the longitudinal axis Y-Y of the compressor 13. Hereinafter, for efficiency, the direction extending from the upstream portion of the compressor casing 24 to the downstream direction of the compressor casing shall be referred to as the axial direction. The direction extending along the slot 32 in a direction perpendicular to the axial direction shall be referred to as the circumferential direction. The direction extending from the stator vane 30 to the longitudinal axis Y-Y of the compressor 13 shall be referred to as the radial direction. The terms axial, circumferential and radial shall be used to specify directions of measurements (e.g. circumferential length, radial thickness) and components of measurement (e.g. the axial component of the minor diagonal). These terms are generally used to specify the measurements and components of measurement when the stator vanes 30 are in an unrotated position, unless stated otherwise. Rotation of the stator vanes 30 occurs about an axis extending perpendicularly from the longitudinal axis Y-Y of the compressor 13 (i.e. about a radial axis).

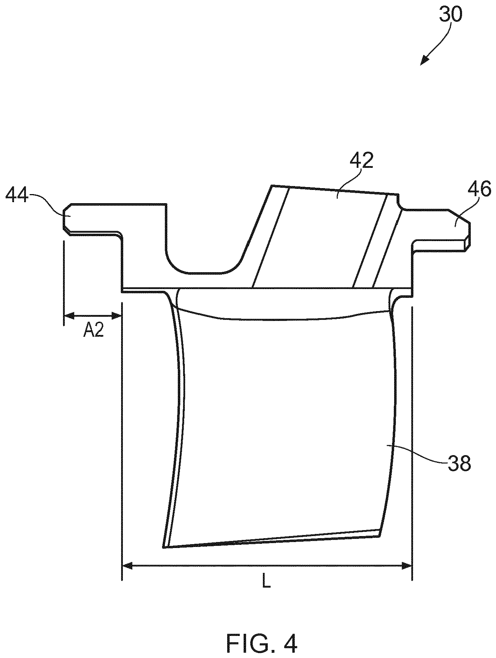

**Figure 4** shows a side view of the stator vane 30. The radial thickness of the front tang 44 and the rear tang 46 is less than the radial thickness of the platform 42. Accordingly, the base 36 has a T-shaped cross-sectional profile, which fits within one of the T-shaped annular slots 32. The front and rear tangs 44, 46 of the stator vanes 30 prevent the stator vanes 30 exiting the slot 32 towards the axis Y-Y. The front tang 44 has an axial length A2 and the platform 42 has an axial length L.

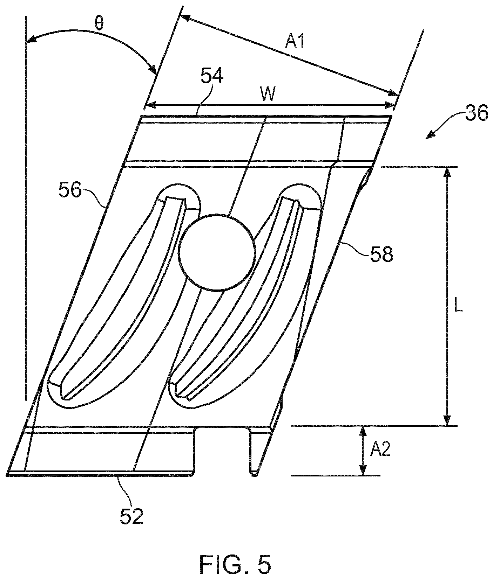

**Figure 5** shows a plan view of the stator vane 30 in isolation as viewed from the longitudinal axis Y-Y of the compressor 13. The base 36 is rhomboid-shaped. That is, the base 36 has four sides (namely a front edge 52, a rear edge 54, a first side edge 56 and a second side edge 58) comprising two pairs of parallel sides (i.e. the front edge 52 and the rear edge 54 are parallel, and the first side edge 56 and the second side edge 58 are parallel), with adjacent sides of unequal length (the front edge 52 and the rear edge 54 are shorter than the first side edge 56 and the second side edge 58) and angles between the sides that are non-right angled. The scarf angle 0 of the base 36 is defined as the angle between the axial direction and the first or second side edge 56, 58 when the stator vane 30 is in an unrotated position. The scarf angle 0 is alternatively defined as either 90 degrees minus the angle in degrees between the front edge 52 and the first side edge 56, or 90 degrees minus the angle in degrees between the rear edge 54 and the second side edge 58. The grading width A1 of the base 36 is defined as the distance between the first side edge 56 and the second side edge 58 in a direction perpendicular to the first side edge 56 and the second side edge 58 (i.e. the minimum distance between the first and second side edges 56, 58). The vane width w is defined as the circumferential component of the width of the platform 42.

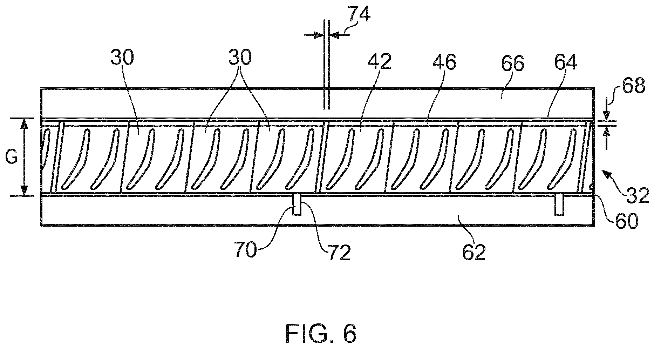

**Figure** 6 shows a plurality of the stator vanes 30 installed within one of the slots 32. For clarity, the stator vanes 30 are shown without borescope holes 49 and air offtakes 51. A front anti-fret liner 60 is disposed within the slot 32, adjacent a front wall 62 of the slot 32. Likewise, a rear anti-fret liner 64 is disposed within the slot 32, adjacent a rear wall 66 of the slot 32. Inner surfaces (i.e. the adjacent, opposing surfaces) of the front and rear anti-fret liners 60, 64 are spaced apart by an axial casing gap G. The axial casing gap G is greater than the axial length L of the platform 42. Accordingly, an axial clearance 68 is provided between the platform 42 and the rear anti-fret liner 64.

The front tang 44 of each of the stator vanes 30 is retained behind the front wall 62 of the slot 32, and the rear tang 46 of each of the stator vanes 30 is retained behind the rear wall 66 of the slot 32. In Figure 6, the platform 42 of each of the stator vanes 30 abuts the front anti-fret liner 60 such that the front tang 44 of each of the stator vanes 30 is hidden from view. A portion of the each of the rear tangs 46 is shown in Figure 6, adjacent the rear anti-fret liner 64.

A total of eight complete stator vanes 30 are shown. A series of notches 72 are provided in the front wall 62, adjacent the slot 32. Every fourth stator vane 30 (hereinafter referred to as a stop vane 30) is secured to the slot 32 via one of the notches 72. Specifically, a stop feature 70 extends through the notch 72, into a corresponding notch 48 of the respective stop vane 30. The stop features 70 pivotally secure the lower right corners of the stop vanes 30 to the casing 24, which prevents the stop vanes 30 moving along the slot 32 in a circumferential direction. Three stator vanes 30 (hereinafter referred to as unsecured stator vanes 30) are disposed between adjacent pairs of stop vanes 30. In contrast to the stop vanes 30, the unsecured stator vanes 30 are not secured to the slot 32 by way of stop features 70.

The notches 72 are spaced along the front wall 62 such that the sum of the vane widths w of the unsecured stator vanes 30 disposed between adjacent stop vanes 30 is less than the circumferential distance along the slot 32 between the adjacent stop vanes 30. Accordingly, circumferential clearances 74 are formed between the stator vanes 30. In the arrangement shown in Figure 6, the stator vanes 30 are displaced as far right as possible. Accordingly, the circumferential clearance 74 is formed between each of the stop vanes 30 and the unsecured stator vane 30 positioned directly to its right. This circumferential clearance 74 may however be formed between any of the adjacent stator vanes 30 or be formed by more than one adjacent pair of stator vanes 30 in a run of four stator vanes 30. The sum of all of the circumferential clearances 74 around the slot 32 is referred to as the total circumferential clearance, and the total circumferential clearance when the platforms are in an unrotated position is designated by g (not shown in the Figures).

The axial clearance 68 and circumferential clearances 74 manage thermal mismatch between the stator vanes 30 and the surrounding components of the compressor casing 24 (i.e. mismatch due to thermal expansion of the stator vanes 30 and the compressor casing 24). In use, the stator vanes 30 will thermally expand more than the compressor casing 24, since the stator vanes 30 are heated by heated compressed gas flow whereas the compressor casing 24 is cooled by the second air flow B (i.e. the bypass air or non-core flow). Further, the compressor casing 24 is typically made of a corrosion-resistant steel such as Jethete® whereas the stator vanes 30 are typically made of a nickel-base alloy such as Inconel® 718, which has a higher thermal expansion coefficient.

As a result of the axial clearance 68 and the circumferential clearances 74, the stator vanes 30 (i.e. both the stop vanes 30 and the unsecured stator vanes 30) are able to rotate within the slot 32 (i.e. rotate about an axis extending perpendicularly from the longitudinal axis Y-Y of the compressor 13). The notches 48 of the stop vanes 30 are provided towards a right hand side of the front tang 44. Accordingly, rotational movement of the stop vanes 30 in a clockwise direction (as viewed from Figure 6) is promoted, whereas rotational movement of the stop vanes 30 in an anti-clockwise direction is inhibited. Consequently, corresponding rotational movement of the unsecured stator vanes 30 is also encouraged and discouraged. In use, the stator vanes 30 will naturally tend to rotate consistently in a clockwise direction due to the aerodynamic forces acting on the vane platform 42 in a clockwise direction.

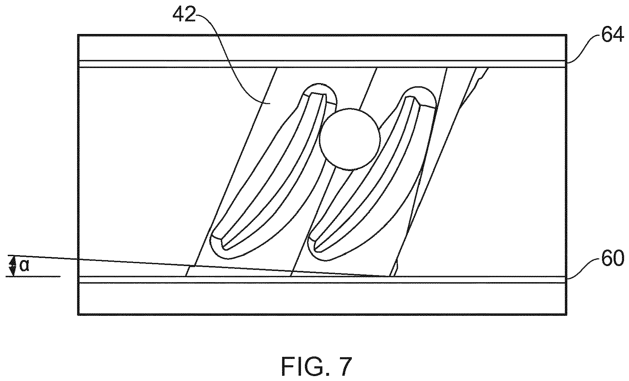

A single unsecured stator vane 30 is shown in a rotated position in **Figure 7.** The amount of rotation $\alpha$ of a stator vane 30 can be defined as the amount of rotation of the stator vane 30 relative to an unrotated position (i.e. a position in which the edge of the platform 42 adjacent the front anti-fret liner 60 is parallel to the front anti-fret liner 60). In the arrangement shown in Figure 7, the amount of rotation $\alpha$ of the stator vane 30 is such that the lower-right corner of the platform 42 abuts the front anti-fret liner 60 and the upper-left corner of the platform 42 abuts the rear anti-fret liner 64. In the rotated position shown in Figure 7, the axial clearance 68 is fully consumed. The stator vane 30 is therefore unable to rotate any further in the clockwise direction due to the front and rear anti-fret liners 60, 64. This is referred to as axial locking.

Although only a single unsecured stator vane 30 is shown in Figure 7, each unsecured stator vane 30 and each stop vane 30 may exhibit rotational movement. However, the configuration shown in Figure 6 prevents axial locking, whilst allowing circumferential locking. Circumferential locking occurs when a stator vane 30 is unable to rotate any further away from the unrotated position due to adjacent stator vanes 30 preventing further rotation. Once circumferential locking has occurred, the stator vanes 30 are able to unlock by rotating in the opposite direction. Circumferential locking is preferential over axial locking, since axial locking risks the stator vanes 30 becoming permanently or semi-permanently fixed to the front and rear anti-fret liners 60, 64. Further, axial locking results in wear of the anti-fret liners 60, 64.

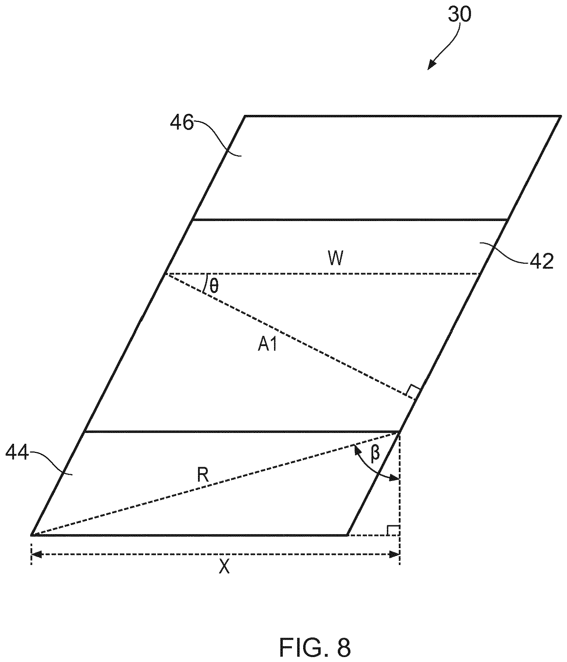

In order to prevent axial locking of the stator vanes 30 whilst allowing circumferential locking, the stator vanes 30 and compressor casing 24 must have specific dimensions, as explained with reference to Figures 8, 9 and 10.

**Figure 8** shows a geometric representation of a stator vane 30 comprising a platform 42, a front tang 44 and a rear tang 46. Dashed lines are used to highlight geometric features of the stator vane 30. For clarity, the first aerofoil 38 and the second aerofoil 40 are not shown in Figure 8. In Figure 8, the vane width w is defined by the following equation:

$$w = \frac{A1}{\cos\theta} \qquad (1)$$

The major diagonal of the front tang 44 is shown in dashed lines, connecting the lower left corner of the front tang 44 to the upper right corner of the front tang 44. The major diagonal is the line segment joining the two opposing vertices of the front tang 44 that are furthest apart. The length of the major diagonal of the front tang 44 is denoted by R and the circumferential component of the major diagonal of the front tang 44 is denoted by X. X is defined by the following equation:

$$X = R\sin\beta \qquad (2)$$

Where $\beta$ is the angle formed between the major diagonal of the front tang 44 and the axial direction.

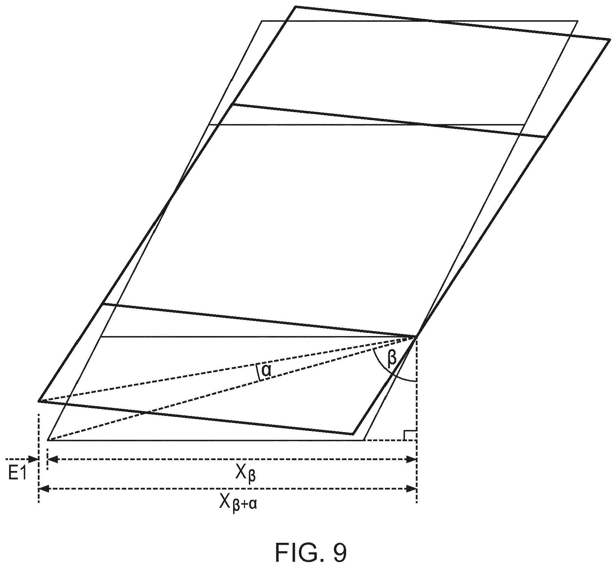

**Figure 9** shows the stator vane 30 rotated about the upper right corner of the front tang 44 in a clockwise direction. The unrotated stator vane 30 (as shown in Figure 8) is also shown in phantom. The circumferential component of the displacement of the lower left corner of the front tang 44 when the stator vane 30 is rotated by an angle $\alpha$ in a clockwise direction is denoted by E1. E1 is defined by the following equation:

$$E1 = X_{\beta+\alpha} - X_\beta \qquad (3)$$

Where $X_\beta$ is the circumferential component of the major diagonal of the front tang 44 when the stator vane 30 is not rotated and $X_{\beta+\alpha}$ is the circumferential component of the major diagonal of the front tang 44 when the stator vane 30 is rotated.

E1 is further defined by the following equation:

$$E1 = R\sin(\beta + \alpha) - R\sin(\beta) \qquad (4)$$

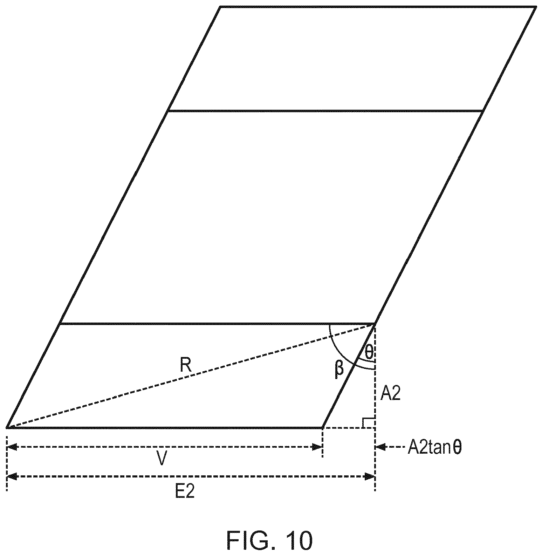

**Figure 10** shows the stator vane 30 in its unrotated position, as per Figure 8. In Figure 10, the circumferential component of the major diagonal of the front tang 44 when the stator vane 30 is not rotated is denoted by E2 (also previously referred to as X or $X_\beta$). E2 is defined by the following equation:

$$E2 = v + (A2\tan\theta) \qquad (5)$$

Where v is the circumferential component of the width of the front tang 44, and A2 is the axial length of the front tang 44 when the stator vane 30 is unrotated.

The length R of the major diagonal of the front tang 44 is defined by the following equation:

$$R = \sqrt{A2^2 + E2^2} \qquad (6)$$

The angle $\beta$ formed between the major diagonal and the axial direction is defined by the following equation:

$$\beta = \tan^{-1}\left(\frac{E2}{A2}\right) \qquad (7)$$

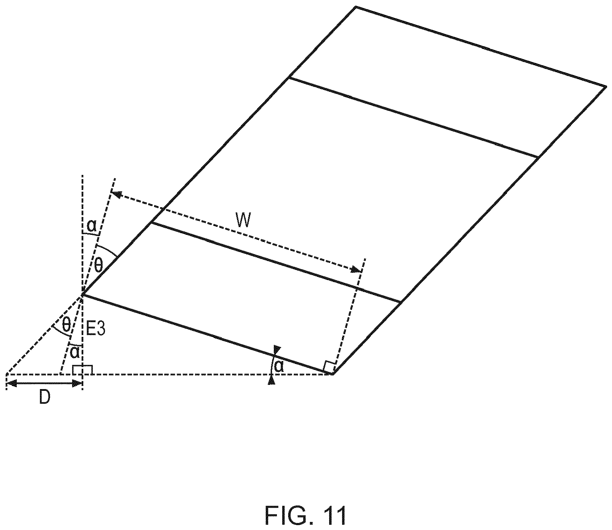

**Figure 11** shows the stator vane 30 rotated about the upper right corner of the front tang 44 in a clockwise direction, as per Figure 9. The axial distance moved by the lower left corner of the front tang 44 when the stator vane is rotated by an angle $\alpha$ is denoted by E3. E3 is defined by the following equation:

$$E3 = w \sin \alpha \qquad (8)$$

This equation can be rearranged as follows, in view of the first equation mentioned with reference to Figure 8:

$$E3 = \left(\frac{A1}{\cos \theta}\right) \sin \alpha \qquad (9)$$

The circumferential distance moved by the lower left corner of the front tang 44 when the stator vane is rotated by an angle $\alpha$ is denoted by D. D is approximated by the following equation:

$$D = E3 \tan(\theta + \alpha) \qquad (10)$$

It thus follows that in a portion of the compressor casing 24 having n adjacent stator vanes 30 rotated by an angle $\alpha$, the circumferential gap $E4_n$ consumed by "shearing" of the adjacent stator vanes 30 (i.e. rotation of multiple adjacent stator vanes 30) is defined by the following equation:

$$E4_n = (n - 1) * (E3 \tan(\theta + \alpha)) \qquad (11)$$

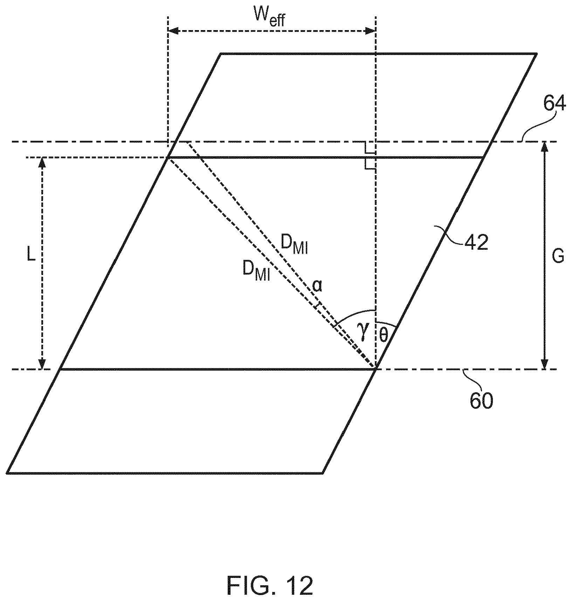

**Figure 12** shows the stator vane 30 in its unrotated position, as per Figures 8 and 10. The inner edges of the front and rear anti-fret liners 60, 64 are shown in dashed lines. The minor diagonal of the platform 42 is likewise shown in dashed lines. The minor diagonal of the platform 42 is the diagonal formed between the upper left corner of the platform 42 and the lower right corner of the platform 42 (i.e. the line segment joining the two opposing vertices of the platform 42 that are closest together). The minor diagonal of the platform 42 is also shown in dashed lines in a rotated position, where the stator vane 30 is rotated about the upper right corner of the front tang 44 in a clockwise direction by an angle $\alpha$ so that it contacts both the front and rear anti-fret liners 60, 64.

The circumferential component of the minor diagonal of the platform 42 when the stator vane 30 is unrotated is denoted by $W_{eff}$. $D_{Mi}$ denotes the length of the minor diagonal of the platform 42. The axial distance between the upper and lower edges of the platform 42 (i.e. the minimum distance between the upper and lower edges of the platform 42) is denoted by L. The angle formed between the minor diagonal of the platform 42 and the axial direction when the stator vane 30 is in its unrotated position is denoted by $\gamma$. The casing gap G is defined by the following equation:

$$G = D_{Mi} \cos(\gamma - \alpha) \qquad (12)$$

This equation can be rearranged so as to define the angle of rotation $\alpha$ of the stator vane 30 in terms of the angle $\gamma$, the casing gap G and the length $D_{Mi}$, as follows:

$$\alpha = \gamma - \cos^{-1}\left(\frac{G}{D_{Mi}}\right) \qquad (13)$$

Circumferential locking occurs when the following condition is met, using $\alpha$ as defined by equation 13:

$$g < E1 + E4 \qquad (14)$$

To ensure that the stator vanes 30 lock circumferentially rather than axially, the following condition must be met:

$$angle\ at\ which\ stator\ vanes\ lock\ circumferentially \qquad (15)$$

$$< angle\ at\ which\ stator\ vanes\ lock\ axially$$

Based on the equations above, this condition is met when the following inequality is satisfied:

$$90 - \left( \sin^{-1}\left( \frac{\frac{C}{N}\sin(90+\theta)}{\frac{C}{N}+\frac{g}{N}} \right) + \theta \right) \qquad (16)$$

$$< \tan^{-1}\left( \frac{\frac{C}{N} - L\tan\theta}{L} \right)$$

$$- \cos^{-1}\left( \frac{G}{\sqrt{L^2 + \left(\frac{C}{N} - L\tan\theta\right)^2}} \right)$$

Where C is the circumference of the circle formed by the radially outer surfaces of the platforms 42 and N is the number of stator vanes 30 within the annular slot 32.

Provided the above condition is met, as the angle of rotation $\alpha$ of the stator vanes 30 increases, the total circumferential clearance g is consumed before the axial clearance 68 is consumed. Once the stator vanes 30 are circumferentially locked, they cannot rotate any further from the unrotated position and cannot therefore axially lock. Any additional circumferential expansion of the stator vanes 30 due to thermal expansion will cause the stator vanes 30 to rotate at least part way back to their unrotated position.

Although it has been described that the stator vane 30 comprises a first aerofoil 38 and a second aerofoil 40 (i.e. that the stator vanes 30 are "welded doubles"), they may alternatively comprise a single aerofoil or more than two aerofoils. Stator vanes 30 comprising more than one aerofoil may be manufactured by fixing multiple stator vanes together, for example by welding. Stator vanes 30 comprising a single aerofoil do not require a fixing process and may therefore be less expensive to produce and quicker to manufacture than alternative arrangements. Stator vanes 30 comprising a single aerofoil are also less likely to introduce non-conformances that can lead to build issues.

Although it has been described that every fourth stator vane 30 is a stop vane 30, any proportion of the stator vanes 30 may be stop vanes 30. For example, every second or sixth stator vane 30 may be a stop vane 30.

For clarity, the stator vanes 30 shown in the Figures have a variety of different scarf angles $\theta$. For example, the stator vanes 30 are shown as having a scarf angle 0 of approximately 20 degrees in Figure 5, approximately 10 degrees in Figure 6 and approximately 25 degrees in Figures 8 to 12. These values of scarf angles $\theta$ are for illustrative purposes only, however any value of scarf angle $\theta$ that meets the conditions specified by the inequality of equation 16 may be used. For example, the scarf angle $\theta$ may instead be 19 or 20 degrees, be between 18 and 21 degrees or be between 12 and 30 degrees, provided that the conditions specified by the inequality of equation 16 are met. It has been found that an increase in scarf angle $\theta$ increases the likelihood of circumferential locking whilst reducing the likelihood of axial locking.

As an example, it has been found that a 0.3 degree increase in scarf angle $\theta$ in one example is sufficient to compensate for the increase in permissible rotation from the axial clearance 68 in going from stator vanes 30 comprising a first aerofoil 38 and a second aerofoil 40 (i.e. "welded doubles") to stator vanes 30 comprising only a single aerofoil. The potential increase in surge margin penalty due to an increase in vane rotation is mitigated by encouraging the stator vanes 30 to cease rotating due to circumferential locking (at a lower angle) instead of the axial clearance 68. In some examples, it has been found that a minimum scarf angle $\theta$ of 10.3 degrees will mitigate the effect to the surge margin of going from welded doubles to stator vanes 30 comprising only a single aerofoil for the given stage of vanes. Therefore, a scarf angle $\theta$ of approximately 11 degrees is suitable for minimising the size of the platform 42 by fitting the platform 42 to the angle of the aerofoil or aerofoils.

It has been described that the base 36 is rhomboid-shaped. However, the base 36 may instead be rhombus-shaped. Alternatively, the base 36 may be rectangular-shaped or square-shaped, in which case the scarf angle $\theta$ is zero.

Although it has been described that a front anti-fret liner 60 and a rear anti-fret liner 64 are disposed within the slot 32, this need not be the case. When front and rear anti-fret liners 60, 64 are not provided, the axial casing gap G is defined as the distance between the inner surfaces (i.e. the adjacent surfaces) of the the front wall 62 and the rear wall 66 of the slot 32 (i.e. the maximum axial distance that the platform 42 can occupy).

Although it has been described that the stator vanes 30 are compressor stator vanes (i.e. that they are fixed to the compressor casing 24), they may alternatively be turbine stator vanes (i.e. be fixed to a casing of the high-pressure turbine 16, intermediate pressure turbine 17 or low-pressure turbine 18). The structure of the turbine casing may substantially correspond to the structure of the compressor casing 24.

Although it has been described that the abovementioned arrangement is for a high bypass ratio turbofan, it is suitable for any type of gas turbine engine. The abovementioned arrangement may be used in a turboprop engine, for example. The turboprop engine may be a TP400®, for example. The gas turbine engine may be used in an aircraft. The gas turbine engine may alternatively be used for other applications, such as marine applications.

Although it has been described that the compressor casing 24 is cooled by offtake air, in alternative arrangements, for example in turboprop engines such as the TP400®, cooling can be effected by ambient air, or, depending on the set-up, bleed offtake air.

Although not shown, one or more corners of the platform 42 or tangs 44, 46 may be rounded. This results in a corresponding reduction in the length of the major and minor diagonals of the respective platforms 42 and tangs 44, 46.

Although it has been described that the notches 48 of the stop vanes 30 are provided towards a right hand side of the front tang 44, the notches 48 may be provided anywhere along the front tang 44.

Although it has been described that the stator vane 30 is a cantilevered stator vane, it may instead be a shrouded stator vane.

The geometry of the examples discussed above may be mirrored such that features that are described as being on the left are on the right, and vice versa.

**Claims**

1. A casing assembly for a gas turbine engine (10), the casing assembly comprising:

   a casing (24) comprising a slot (32) defined by a front surface and a rear surface, the front surface and the rear surface being spaced apart by an axial casing gap (G); and
   a plurality of stator vanes (30) each comprising a platform (42) and at least one aerofoil (38, 40) extending from the platform, the platform being received within the slot and having an axial length (L) and a circumferential length (w);
   wherein the circumferential lengths of the platforms define a total circumferential length which is less than the circumference of the casing at an outer radial surface of the platforms and so defines a circumferential clearance (74);
   wherein the axial length of each of the platforms is less than the axial casing gap and so defines an axial clearance (68);
   wherein the circumferential and axial clearances allow the platforms of the stator vanes to rotate within the slot, with rotation of the platforms from an unrotated position reducing the circumferential and axial clearance;
   wherein the front and rear surfaces of the casing and the platforms of the stator vanes are configured such that rotation of the platforms from the unrotated position entirely consumes the circumferential clearance so that adjacent platforms abut against one another and prevent further rotation of the platforms while maintaining an axial clearance,

   **the casing assembly characterised in that** the front and rear surfaces of the casing and the platforms of the stator vanes are configured such that the following inequality is satisfied:

$$90 - \left( \sin^{-1}\left( \frac{\frac{C}{N}\sin(90+\theta)}{\frac{C}{N}+\frac{g}{N}} \right) + \theta \right)$$

$$< \tan^{-1}\left( \frac{\frac{C}{N} - L\tan\theta}{L} \right) - \cos^{-1}\left( \frac{G}{\sqrt{L^2 + \left(\frac{C}{N} - L\tan\theta\right)^2}} \right)$$

   where θ represents a scarf angle of the platforms of the stator vanes, N represents the number of stator vanes received within the slot, L represents the axial lengths of the platforms, C represents the circumference of the casing at an outer radial surface of the platforms, g represents the total circumferential clearance when the platforms are in their unrotated positions, and G represents the axial casing gap.

2. A casing assembly as claimed in claim 1, wherein the platforms of each of the stator vanes has a scarf angle ($\theta$) which is non-zero.

3. A casing assembly as claimed in claim 2, wherein each of the scarf angles is between 12 and 30 degrees.

4. A casing assembly as claimed in claim 3, wherein each of the scarf angles is between 18 and 21 degrees.

5. A casing assembly as claimed in any of the preceding claims, wherein a single aerofoil extends from the platform of each of the plurality of stator vanes.

6. A casing assembly as claimed in any preceding claim, wherein the platform of at least one of the plurality of stator vanes is pivotally connected to the casing.

7. A casing assembly as claimed in claim 6, wherein the platform of the at least one of the plurality of stator vanes is pivotally connected to the casing at an upstream portion of the platform.

8. A casing assembly as claimed in any preceding claim, wherein the casing is a compressor casing and the stator vanes are compressor stator vanes.

9. A gas turbine engine comprising a casing assembly as claimed in any preceding claim.

10. A gas turbine engine as claimed in claim 9, wherein the gas turbine engine is a turboprop engine.

11. A stator vane which, when received by a casing, forms a casing assembly as claimed in any one of claims 1 to 8 or a gas turbine engine as claimed in claim 9 or claim 10.

12. A method of manufacturing a casing assembly for a gas turbine engine, the casing assembly comprising:

    a casing comprising a slot defined by a front surface and a rear surface, the front surface and the rear surface being spaced apart by an axial casing gap; and

    a plurality of stator vanes each comprising a platform which is received within the slot, the platform having an axial length and a circumferential length;

    wherein the circumferential lengths of the platforms define a total circumferential length which is less than the circumference of the casing at an outer radial surface of the platforms and so defines a circumferential clearance;

    wherein the axial length of each of the platforms is less than the axial casing gap and so defines an axial clearance;

    wherein the circumferential and axial clearances allow the platforms of the stator vanes to rotate within the slot, with rotation of the platforms from an unrotated position reducing the circumferential and axial clearance;

    wherein the method comprises configuring the front and rear surfaces of the casing and/or the platforms of the stator vanes such that rotation of the platforms from the unrotated position entirely consumes the circumferential clearance so that adjacent platforms abut against one another and prevent further rotation of the platforms while maintaining an axial clearance,

**the method characterised in that** the front and rear surfaces of the casing and the platforms of the stator vanes are configured such that the following inequality is satisfied:

$$90 - \left( \sin^{-1} \left( \frac{\frac{C}{N} \sin(90 + \theta)}{\frac{C}{N} + \frac{g}{N}} \right) + \theta \right)$$

$$< \tan^{-1} \left( \frac{\frac{C}{N} - L \tan\theta}{L} \right) - \cos^{-1} \left( \frac{G}{\sqrt{L^2 + \left( \frac{C}{N} - L \tan\theta \right)^2}} \right)$$

where θ represents a scarf angle of the platforms of the stator vanes, N represents the number of stator vanes received within the slot, L represents the axial lengths of the platforms, C represents the circumference of the casing at an outer radial surface of the platforms, g represents the total circumferential clearance when the platforms are in their unrotated positions, and G represents the axial casing gap.

**Patentansprüche**

1. Gehäuseanordnung für einen Gasturbinenmotor (10), wobei die Gehäuseanordnung umfasst:

   ein Gehäuse (24), das eine durch eine Vorderfläche und eine Rückfläche definierte Nut (32) umfasst, wobei die Vorderfläche und die Rückfläche durch einen axialen Gehäusespalt (G) voneinander mit Abstand angeordnet sind; und
   eine Vielzahl von Statorschaufeln (30), die jeweils eine Plattform (42) und mindestens ein sich von der Plattform erstreckendes Schaufelblatt (38, 40) umfassen, wobei die Plattform in der Nut aufgenommen wird und eine Axiallänge (L) und eine Umfangslänge (w) aufweist;
   wobei die Umfangslängen der Plattformen eine Gesamtumfangslänge definieren, die kleiner als der Umfang des Gehäuses an einer äußeren radialen Fläche der Plattformen ist und so ein Umfangsspiel (74) definiert;
   wobei die Axiallänge jeder der Plattformen kleiner als der axiale Gehäusespalt ist und so ein Axialspiel (68) definiert;
   wobei das Umfangs- und Axialspiel es den Plattformen der Statorschaufeln ermöglichen, sich innerhalb der Nut zu drehen, wobei die Drehung der Plattformen aus einer nicht gedrehten Position das Umfangs- und Axialspiel verringert;
   wobei die Vorder- und Rückfläche des Gehäuses und die Plattformen der Statorschaufeln so konfiguriert sind, dass die Drehung der Plattformen aus der nicht gedrehten Position das Umfangsspiel vollständig aufbraucht, so dass benachbarte Plattformen aneinander anliegen und eine weitere Drehung der Plattformen verhindern, während ein Axialspiel beibehalten wird, **wobei die Gehäuseanordnung dadurch gekennzeichnet ist, dass** die Vorder- und Rückfläche des Gehäuses und die Plattformen der Statorschaufeln so konfiguriert sind, dass die folgende Ungleichung erfüllt ist:

$$90 - \left( \sin^{-1} \left( \frac{\frac{C}{N} \sin(90 + \theta)}{\frac{C}{N} + \frac{g}{N}} \right) + \theta \right)$$

$$< \tan^{-1} \left( \frac{\frac{C}{N} - L \tan\theta}{L} \right) - \cos^{-1} \left( \frac{G}{\sqrt{L^2 + \left( \frac{C}{N} - L \tan\theta \right)^2}} \right)$$

   wobei θ für einen Schrägungswinkel der Plattformen der Statorschaufeln steht, N für die Anzahl der in der Nut aufgenommenen Statorschaufeln steht, L für die axialen Längen der Plattformen steht, C für den Umfang des Gehäuses an einer äußeren radialen Oberfläche der Plattformen steht, g für das gesamte Umfangsspiel steht, wenn sich die Plattformen in ihren nicht gedrehten Positionen befinden, und G für den axialen Gehäusespalt steht.

2. Gehäuseanordnung nach Anspruch 1, wobei die Plattformen jeder der Statorschaufeln einen Schrägungswinkel (θ) aufweisen, der ungleich Null ist.

3. Gehäuseanordnung nach Anspruch 2, wobei sich jeder der Schrägungswinkel zwischen 12 und 30 Grad befindet.

4. Gehäuseanordnung nach Anspruch 3, wobei sich jeder der Schrägungswinkel zwischen 18 und 21 Grad befindet.

5. Gehäuseanordnung nach einem der vorstehenden Ansprüche, wobei sich ein einzelnes Schaufelblatt von der Plattform jeder der Vielzahl von Statorschaufeln erstreckt.

6. Gehäuseanordnung nach einem der vorstehenden Ansprüche, wobei die Plattform von mindestens einer der Vielzahl von Statorschaufeln schwenkbar mit dem Gehäuse verbunden ist.

7. Gehäuseanordnung nach Anspruch 6, wobei die Plattform von mindestens einer der Vielzahl von Statorschaufeln an einem Abschnitt stromaufwärts der Plattform schwenkbar mit dem Gehäuse verbunden ist.

8. Gehäuseanordnung nach einem der vorstehenden Ansprüche, wobei das Gehäuse ein Kompressorgehäuse ist und die Statorschaufeln Kompressor-Statorschaufeln sind.

9. Gasturbinenmotor, der eine Gehäuseanordnung nach einem der vorstehenden Ansprüche umfasst.

10. Gasturbinenmotor nach Anspruch 9, wobei der Gasturbinenmotor ein Turbopropmotor ist.

11. Statorschaufel, die, wenn sie von einem Gehäuse aufgenommen wird, eine Gehäuseanordnung nach einem der Ansprüche 1 bis 8 oder einen Gasturbinenmotor nach Anspruch 9 oder 10 bildet.

12. Verfahren zum Herstellen einer Gehäuseanordnung für einen Gasturbinenmotor, wobei die Gehäuseanordnung umfasst:

ein Gehäuse, das eine durch eine Vorderfläche und eine Rückfläche definierte Nut umfasst, wobei die Vorderfläche und die Rückfläche durch einen axialen Gehäusespalt voneinander mit Abstand angeordnet sind; und eine Vielzahl von Statorschaufeln, die jeweils eine Plattform umfassen, die in der Nut aufgenommen wird, wobei die Plattform eine Axiallänge und eine Umfangslänge aufweist;
wobei die Umfangslängen der Plattformen eine Gesamtumfangslänge definieren, die kleiner als der Umfang des Gehäuses an einer äußeren radialen Fläche der Plattformen ist und so ein Umfangsspiel definiert;
wobei die Axiallänge jeder der Plattformen kleiner als der axiale Gehäusespalt ist und so ein Axialspiel definiert;
wobei das Umfangs- und Axialspiel es den Plattformen der Statorschaufeln ermöglichen, sich innerhalb der Nut zu drehen, wobei die Drehung der Plattformen aus einer nicht gedrehten Position das Umfangs- und Axialspiel verringert;
wobei das Verfahren das Konfigurieren der Vorder- und Rückfläche des Gehäuses und/oder der Plattformen der Statorschaufeln umfasst, so dass die Drehung der Plattformen aus der nicht gedrehten Position das Umfangsspiel vollständig aufbraucht, so dass benachbarte Plattformen aneinander anstoßen und eine weitere Drehung der Plattformen verhindern, während ein Axialspiel beibehalten wird,
**wobei das Verfahren dadurch gekennzeichnet ist, dass** die Vorder- und Rückfläche des Gehäuses und die Plattformen der Statorschaufeln so konfiguriert sind, dass die folgende Ungleichung erfüllt ist:

$$90 - \left( \sin^{-1}\left( \frac{\frac{C}{N}\sin(90+\theta)}{\frac{C}{N}+\frac{g}{N}} \right) + \theta \right)$$

$$< \tan^{-1}\left( \frac{\frac{C}{N} - L\tan\theta}{L} \right) - \cos^{-1}\left( \frac{G}{\sqrt{L^2 + \left(\frac{C}{N} - L\tan\theta\right)^2}} \right)$$

wobei θ für einen Schrägungswinkel der Plattformen der Statorschaufeln steht, N für die Anzahl der in der Nut aufgenommenen Statorschaufeln steht, L für die axialen Längen der Plattformen steht, C für den Umfang des Gehäuses an einer äußeren radialen Oberfläche der Plattformen steht, g für das gesamte Umfangsspiel steht, wenn sich die Plattformen in ihren nicht gedrehten Positionen befinden, und G für den axialen Gehäusespalt steht.

**Revendications**

1. Ensemble de carter pour un moteur à turbine à gaz (10), l'ensemble de carter comprenant :

   un carter (24) comprenant une fente (32) définie par une surface antérieure et une surface postérieure, la surface antérieure et la surface postérieure étant espacées par un écart axial (G) du carter ; et
   une pluralité d'aubes de stator (30) comprenant chacune une plate-forme (42) et au moins une surface portante (38, 40) s'étendant depuis la plate-forme, la plate-forme se plaçant au sein de la fente, et possédant une longueur axiale (L) et une longueur circonférentielle (w) ;
   les longueurs circonférentielles des plates-formes définissant une longueur circonférentielle totale inférieure à la circonférence du carter, sur une surface radiale externe des plates-formes, en définissant ainsi un dégagement circonférentiel (74) ;
   la longueur axiale de chacune des plates-formes étant inférieure à l'écart axial du carter, et définissant ainsi un dégagement axial (68) ;
   les dégagements circonférentiel et axial permettant la rotation des aubes de stator au sein de la fente, la rotation des plates-formes depuis une position non tournée réduisant les dégagements circonférentiel et axial ;
   les surfaces antérieure et postérieure du carter et les plates-formes des aubes de stator étant configurées de sorte que la rotation des plates-formes depuis la position non tournée consomme entièrement le dégagement circonférentiel, de sorte que des plates-formes adjacentes viennent buter l'une contre l'autre, et empêchent toute autre rotation des plates-formes, tout en maintenant un dégagement axial, **l'ensemble de carter étant caractérisé en ce que** les surfaces antérieure et postérieure du carter et les plates-formes des aubes de stator sont configurées de façon à répondre à l'inéquation suivante :

$$90 - \left( \sin^{-1}\left( \frac{\frac{C}{N}\sin(90+\theta)}{\frac{C}{N}+\frac{g}{N}} \right) + \theta \right)$$

$$< \tan^{-1}\left( \frac{\frac{C}{N}-L\tan\theta}{L} \right) - \cos^{-1}\left( \frac{G}{\sqrt{L^2+\left(\frac{C}{N}-L\tan\theta\right)^2}} \right)$$

   dans laquelle θ désigne un angle de biseau des plates-formes des aubes de stator, N désigne le nombre d'aubes de stator introduites dans la fente, L désigne les longueurs axiales des plates-formes, C désigne la circonférence du carter à une surface radiale extérieure des plates-formes, g désigne la représente le dégagement circonférentiel total lorsque les plates-formes se trouvent dans leurs positions non tournées, et G désigne l'écart axial du carter.

2. Ensemble de carter selon la revendication 1, les plates-formes de chacune des aubes de stator présentant un angle de biseau (θ) autre que zéro.

3. Ensemble de carter selon la revendication 2, chacun des angles de biseau étant compris entre 12 et 30 degrés.

4. Ensemble de carter selon la revendication 3, chacun des angles de biseau étant compris entre 18 et 21 degrés.

5. Ensemble de carter selon une quelconque des revendications précédentes, une surface portante individuelle étant déployée depuis la plate-forme de chacune de la pluralité d'aubes de stator.

6. Ensemble de carter selon une quelconque des revendications précédentes, la plate-forme d'au moins une de la pluralité d'aubes de stator étant raccordée par pivotement au carter.

**7.** Ensemble de carter selon la revendication 6, la plate-forme de l'au moins une de la pluralité d'aubes de stator étant raccordée par pivotement au carter à une partie en amont de la plate-forme.

**8.** Ensemble de carter selon une quelconque des revendications précédentes, le carter étant un carter de compresseur, et les aubes de stator étant des aubes de stator de compresseur.

**9.** Moteur à turbine à gaz comprenant un ensemble de carter selon une quelconque des revendications précédentes.

**10.** Moteur à turbine à gaz selon la revendication 9, le moteur à turbine à gaz étant un moteur à turbopropulseur.

**11.** Aube de stator qui, lorsqu'elle est introduite dans un carter, forme un ensemble de carter selon une quelconque des revendications 1 à 8, ou un moteur à turbine à gaz selon la revendication 9 ou la revendication 10.

**12.** Méthode de fabrication d'un ensemble de carter pour un moteur à turbine à gaz, l'ensemble de carter comprenant :

un carter comprenant une fente définie par une surface antérieure et une surface postérieure, la surface antérieure et la surface postérieure étant espacées par un écart axial du carter ; et
une pluralité d'aubes de stator comprenant chacune une plate-forme qui se place dans la fente, la plate-forme possédant une longueur axiale et une longueur circonférentielle ;
les longueurs circonférentielles des plates-formes définissant une longueur circonférentielle totale inférieure à la circonférence du carter, sur une surface radiale externe des plates-formes, en définissant ainsi un dégagement circonférentiel ;
la longueur axiale de chacune des plates-formes étant inférieure à l'écart axial du carter, et définissant ainsi un dégagement axial ;
les dégagements circonférentiel et axial permettant la rotation des plates-formes des aubes de stator au sein de la fente, la rotation des plates-formes depuis une position non tournée réduisant le dégagement circonférentiel et axial ;
la méthode comprenant la configuration des surfaces antérieure et postérieure du carter et/ou des plates-formes des aubes de stator, de sorte que la rotation des plates-formes depuis la position non tournée consomme entièrement le dégagement circonférentiel, afin que des plates-formes adjacentes viennent buter l'une contre l'autre, et empêchent toute autre rotation des plates-formes, tout en maintenant un dégagement axial, **la méthode étant caractérisée en ce que** les surfaces antérieure et postérieure du carter et les plates-formes des aubes de stator sont configurées de façon à répondre à l'inéquation suivante :

$$90 - \left( \sin^{-1}\left( \frac{\frac{C}{N}\sin(90+\theta)}{\frac{C}{N}+\frac{g}{N}} \right) + \theta \right)$$

$$< \tan^{-1}\left( \frac{\frac{C}{N} - L\tan\theta}{L} \right) - \cos^{-1}\left( \frac{G}{\sqrt{L^2 + \left(\frac{C}{N} - L\tan\theta\right)^2}} \right)$$

θ désignant un angle de biseau des plates-formes des aubes de stator, N désignant le nombre d'aubes de stator introduites dans la fente, L désignant les longueurs axiales des plates-formes, C désignant la circonférence du carter à une surface radiale extérieure des plates-formes, g désignant le dégagement circonférentiel total lorsque les plates-formes se trouvent dans leurs positions non tournées, et G désignant l'écart axial du carter.

FIG. 1

FIG. 2

FIG. 3

FIG. 4

FIG. 5

FIG. 6

FIG. 7

FIG. 8

FIG. 9

FIG. 10

FIG. 11

FIG. 12